# EUROPEAN PATENT APPLICATION

(11) **EP 3 605 441 A1**
(43) Date of publication of application: **05.02.2020**
(21) Application number: 18775622.6
(22) Date of filing: 28.03.2018
(51) Int. Cl.: G06Q 50/12, G06Q 30/02, G07G 1/01, G07G 1/12

(54) **INFORMATION PROCESSING SYSTEM AND PROGRAM**

(30) Priority: 29.03.2017 JP 2017065644
(71) Applicant: Recruit Co., Ltd., Tokyo 104-0061 (JP)
(72) Inventor: UEDA, Takehiro, Tokyo 100-6640 (JP)
(74) Representative: EIP
(86) International application number: PCT/JP2018/012621
(87) International publication number: WO 2018/181413

(57) **Abstract**

There is provided an information processing system or the like capable of easily grasping a relationship between the composition of a menu list and the condition of sales of each item at a restaurant. An information processing system 1 includes at least a storage unit 12 that stores order history information for a plurality of items, a menu item analysis unit 131 that classifies each of the plurality of items into one of a plurality of categories on the basis of the order history information, an image analysis unit 132 that acquires a piece of position information on a display region for each item in an image showing a menu list, on which the plurality of items are displayed, and an image display processing unit 134 that generates image data for superimposition and display of a color corresponding to the category, into which each item in the image showing the menu list is classified, in the display region for the item.

## Description

### Cross-Reference to Related Application

The present application is based on Japanese Patent Application No. 2017-065644 filed on March 29, 2017, the disclosure of which is incorporated herein by reference.

### Technical Field

The present disclosure relates to an information processing system and a program for processing information on a menu list at a restaurant.

### Background Art

A customer which has come to a restaurant generally views a presented menu and orders a desired dish. At this time, appeal to the customer may change depending on the visibility of the menu list, the order in which dish items are arranged, the layout, and the like. For this reason, a restaurant creates a well-crafted menu list by highlighting recommended and hot-selling dishes and using many photos.

Patent Literature 1 discloses an information processing system including storage means for storing restaurant information including menu item information on food and drink menu items which a restaurant can provide and a menu item page which constitutes a group of restaurant information providing pages regarding the restaurant and carries at least part of the menu item information, reception means for receiving, from a POS system present at the restaurant, POS data including at least one of the number of orders, the amount of sales, and the profit rate for each menu item during each predetermined period at the restaurant, and control means for updating the menu item information on the menu item page on the basis of the received POS data. In Patent Literature 1, the information processing system dynamically changes menu item information on a restaurant information providing site to menu item information which reflects the tastes of users which have actually visited a restaurant.

### Citation List

### Patent Literature

Patent Literature 1: Japanese Patent Laid-Open No. 2017-4206

### Summary of Invention

However, it is a so-called hard-copied menu list in the form of, e.g., a booklet or a plate that a customer refers to at the time of deciding what to order after coming to a restaurant. Thus, how to compose (elaborate) a menu list leads to appeal to customers, and by extension to sales at the restaurant. It is important to grasp a relationship between the composition of a menu list and the actual condition of sales of each item in order to create an appealing menu list. In regard to this point, Patent Literature 1 does not mention a menu list to be referred to by a customer after coming to a restaurant.

The present disclosure has been made in view of the above-described circumstances, and has as its object to provide an information processing system and a program capable of easily grasping a relationship between the composition of a menu list and the condition of sales of each item at a restaurant.

An information processing system according to an aspect of the present disclosure includes at least a storage unit that stores order history information for a plurality of items, a menu item analysis unit that classifies each of the plurality of items into one of a plurality of categories on the basis of the order history information, an image analysis unit that acquires a piece of position information on a display region for each item in an image showing a menu list, on which the plurality of items are displayed, and an image display processing unit that generates image data for superimposition and display of a color corresponding to the category, into which each item in the image showing the menu list is classified, in the display region for the item.

The information processing system may further include a linking processing unit that links the piece of position information on the display region for each item to the category, into which the item is classified, and the image display processing unit may assign a pixel value for display of the color corresponding to the category linked to the piece of position information to a pixel corresponding to the piece of position information.

In the information processing system, the menu item analysis unit may classify each of the items on the basis of an order quantity for the item and the number of groups of customers.

In the information processing system, the storage unit may further store customer visit history information, and the menu item analysis unit may calculate, for each of the items, an order rate which is a ratio of an order quantity to the number of groups of customers in a first case using the number of groups of customers on first visits as a denominator and an order rate in a second case using the number of groups of customers on second or subsequent visits as a denominator and classify the item on the basis of the order rates in the first and second cases.

In the information processing system, the storage unit may further store information on customer attributes, and the menu item analysis unit may classify each of the items for each of the customer attributes.

The information processing system may further include a terminal device that has an image pickup function and generates the image by performing image pickup of the menu list.

A program according to another aspect of the present disclosure causes a computer to execute at least a step of classifying each of a plurality of items into one of a plurality of categories on the basis of order history information for the plurality of items, a step of acquiring a piece of position information on a display region for each item in an image showing a menu list, on which the plurality of items are displayed, and a step of generating image data for superimposition and display of a color corresponding to the category, into which each item in the image showing the menu list is classified, in the display region for the item.

### Advantageous Effects of Invention

According to the present disclosure, superimposition and display of the color corresponding to the category, into which each item in the image showing the menu list is classified on the basis of the order history information, in the display region for the item allows easy grasping of a relationship between the composition of the menu list and the condition of sales of each item.

Superimposition and display of information on the condition of sales of each item on the image showing the menu list makes it possible to improve a user interface and cut the usage of memory for graphics (e.g., VRAM), as compared to separate display of the image and the information.

### Brief Description of Drawings

[Figure 1] Figure 1 is a diagram showing a schematic configuration of an information processing system according to an embodiment of the present disclosure.
[Figure 2] Figure 2 is a block diagram showing a main configuration of an information processing server shown in Figure 1.
[Figure 3] Figure 3 is a table showing, as an example, a result of analysis by a menu item analysis unit.
[Figure 4] Figure 4 is a schematic chart showing an example of categories, into which dish items are classified.
[Figure 5] Figure 5 is a flow chart showing operation of the information processing system according to the embodiment of the present disclosure.
[Figure 6] Figure 6 is a schematic view showing, as an example, a menu image.
[Figure 7] Figure 7 is a table showing, as an example, respective pieces of position information on display regions for items in the menu image.
[Figure 8] Figure 8 is a table showing an example where each piece of position information is linked to a category for the item.
[Figure 9] Figure 9 is a schematic view showing a display example of a menu image.

### Description of Embodiment

An embodiment of the present disclosure will be described below in detail with reference to the drawings. Note that same elements are denoted by same reference numerals and that a repetitive explanation thereof will be omitted.

### Embodiment

Although the present embodiment will be described, taking as an example a case where information on a menu list at a restaurant is processed, the present disclosure is not intended to be limited to this. An information processing system according to the present disclosure can be applied to every type of business that presents a menu list to a customer and takes an order, such as a take-out restaurant or a massage clinic. The menu list may be of any type, such as a booklet type, a sign type, a stand type, a bill type, or a wall-hung type. If the menu list may be of the bill type or the wall-hung type, cards with respective items written thereon may be arranged, and the plurality of cards as a whole may constitute the menu list. Any method, such as a method that prints characters using a printer, a method that handwrites characters using, e.g., a brush or a marker, or a method that engraves characters in, e.g., a plate, may be adopted as a method for writing characters on the menu list as long as characters can be optically read.

### (1) Configuration of Embodiment

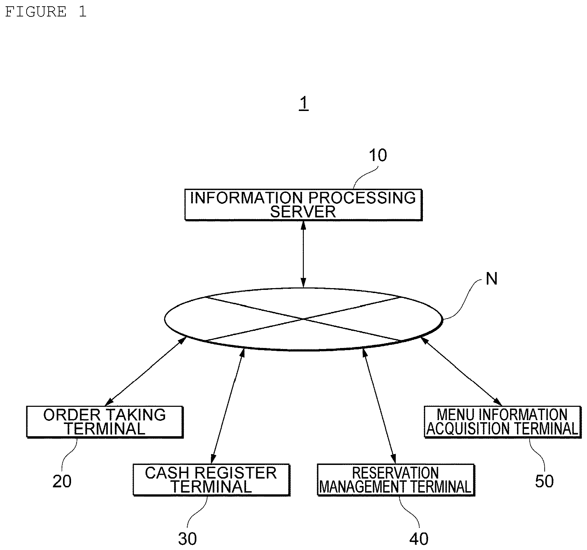

Figure 1 is a diagram showing a schematic configuration of an information processing system 1 according to the present embodiment.

The information processing system 1 is a system for processing information on a menu list which is presented to a customer at a restaurant and is a so-called POS (Point of Sales) cash register system for managing information on orders for dishes and sales. As shown in Figure 1, the information processing system 1 includes an information processing server 10, an order taking terminal 20 which takes an order for a dish from a customer, a cash register terminal 30 which checks out a customer after a meal, a reservation management terminal 40 which manages a customer's reservation, and a menu information acquisition terminal 50 which acquires information on a menu list. The information processing server 10, the order taking terminal 20, the cash register terminal 30, the reservation management terminal 40, and the menu information acquisition terminal 50 are connected over a communication network N.

Although Figure 1 shows one order taking terminal 20, one cash register terminal 30, one reservation management terminal 40, and one menu information acquisition terminal 50, a plurality of terminals 20, a plurality of terminals 30, a plurality of terminals 40, and a plurality of terminals 50 may be provided. In this case, the plurality of terminals 20, the plurality of terminals 30, the plurality of terminals 40, and the plurality of terminals 50 may be installed at one location or one terminal 20, one terminal 30, one terminal 40, and one terminal 50 or a plurality of terminals 20, a plurality of terminals 30, a plurality of terminals 40, and a plurality of terminals 50 may be installed at each of a plurality of locations of a same restaurant chain.

The communication network N includes a communication net which can transmit and receive information among the information processing server 10, the order taking terminal 20, the cash register terminal 30, the reservation management terminal 40, and the menu information acquisition terminal 50. The communication network N may be, for example, any one of the Internet, a LAN, a leased line, a phone line, an intranet, a mobile communication network, Bluetooth®, Wi-Fi (Wireless Fidelity), any other communication line, or a combination thereof, regardless of whether wired or wireless.

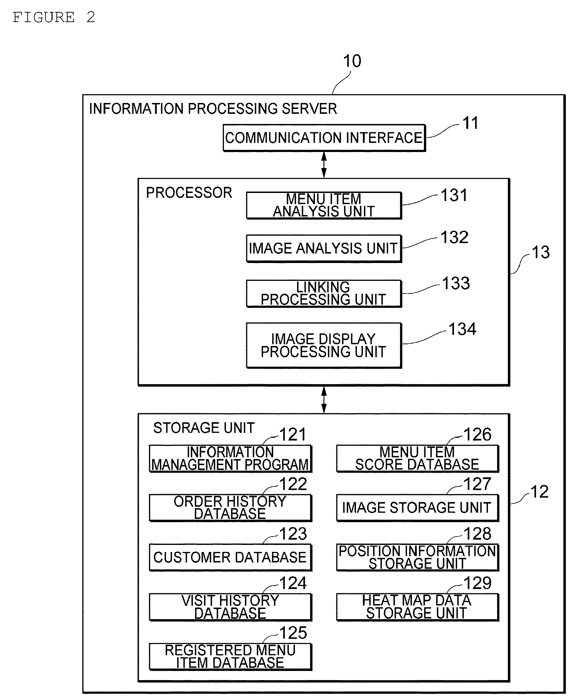

Figure 2 is a block diagram showing a main configuration of the information processing server 10. The information processing server 10 is composed of, for example, a computer high in arithmetic processing power. Through execution of a predetermined program, the information processing server 10 implements a server function of managing information on orders for dishes, sales, and reservations in coordination with the order taking terminal 20, the cash register terminal 30, and the reservation management terminal 40 and processing information on a menu list in coordination with the menu information acquisition terminal 50. As shown in Figure 2, the information processing server 10 includes a communication interface 11, a storage unit 12, and a processor 13.

The communication interface 11 is a hardware module for connecting the information processing server 10 to the communication network N and communicating with a different terminal on the communication network N. The communication interface 11 is, for example, a modulator-demodulator, such as an ISDN modem, an ADSL model, a cable modem, an optical modem, or a software modem.

The storage unit 12 is, for example, a logic device which is provided by a storage region of a physical device composed of a computer-readable recording medium, such as a disk drive or a semiconductor memory (e.g., a ROM or a RAM). The storage unit 12 may be constructed by mapping a plurality of physical device to one logic device or may be constructed by mapping one physical device to a plurality of logic devices. The storage unit 12 stores various programs including an operating system program and a driver program and various data used during execution of the programs. More specifically, the storage unit 12 stores an information processing program 121 to be executed by the processor 13, an order history database 122 to be used during execution of the program, a customer database 123, a visit history database 124, a registered menu item database 125, and a menu item score database 126. The storage unit 12 also includes an image storage unit 127 which stores an image of a menu list, a position information storage unit 128 which stores respective pieces of position information on display regions for items in the menu list, and a heat map data storage unit 129 which stores image data for superimposition and display on the image of the menu list.

The order history database 122 stores order history data, such as identification information and the quantity of an ordered item, in association with background data, such as a date, a day of the week, a time of day, and the weather, and customer attribute data, such as the headcount of customers, the gender of and an age bracket for each customer, and a group composition (e.g., a family or friends), on the basis of data transmitted from the cash register terminal 30 (to be described later).

The customer database 123 stores customer data, such as a customer ID, a name, gender, an age group, and contact information, on the basis of data transmitted from the reservation management terminal 40 (to be described later).

The visit history database 124 stores visit data, such as a customer ID, a name, a headcount, an arrival time, a leaving time, a dwell time period, and the number of visits, on the basis of data transmitted from the reservation management terminal 40 (to be described later).

The registered menu item database 125 stores information on a dish item provided at a restaurant in question. The item-related information includes pieces of information, such as a name (a menu item name), identification information (a menu item ID), a price, a cost, and a profit rate.

The menu item score database 126 stores information, such as an analysis result obtained through analysis by a menu item analysis unit 131 (to be described later) for each of items registered in the registered menu item database 125.

The processor 13 is composed of an arithmetic logic unit (e.g., a CPU) which performs an arithmetic operation, a logic operation, a bit operation, and the like and various registers, and centrally controls the units of the information processing server 10 by executing the various programs stored in the storage unit 12. The various registers are, for example, a program counter, a data register, an instruction register, a general-purpose register, and the like. The processor 13 implements an information processing function of managing information on orders for dishes, sales, and reservations in coordination with the order taking terminal 20, the cash register terminal 30, the reservation management terminal 40, and the menu information acquisition terminal 50 and processing information on a menu list, by executing the information processing program 121.

To be more specific, the processor 13 includes the menu item analysis unit 131, an image analysis unit 132, a linking processing unit 133, and an image display processing unit 134.

The menu item analysis unit 131 calculates a score representing the degree of popularity for each of dish items provided at the restaurant on the basis of pieces of information stored in the order history database 122, the customer database 123, and the visit history database 124 and classifies each item into one of a plurality of categories in accordance with the score. To be more specific, the menu item analysis unit 131 calculates, as a score representing the degree of popularity of each item, an order rate which is the ratio of an order quantity for the item to the number of groups of customers as visitors. Examples of the order rate include a first-visit order rate which uses the number of groups of customers on their first visits (first-time visitors) as a denominator and a repeat order rate which uses the number of groups of customers on their second or subsequent visits (repeat guests) as a denominator.

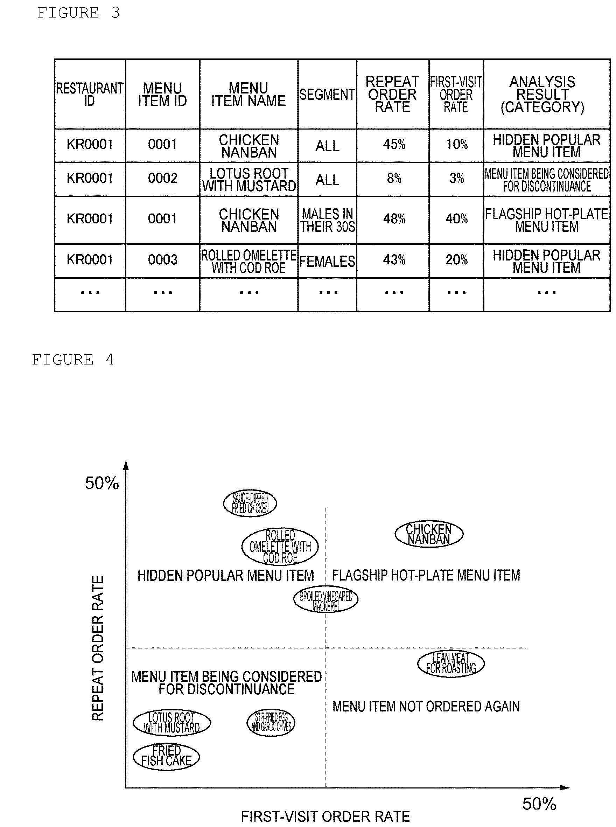

Figure 3 is a table showing, as an example, a result of analysis by the menu item analysis unit 131. Figure 4 is a schematic chart showing an example of categories, into which dish items are classified. In the present embodiment, the category of "flagship hot-plate menu item" (an item high both in first-visit order rate and repeat order rate), the category of "hidden popular menu item" (an item not so high in first-visit order rate but high in repeat order rate), the category of "menu item not ordered again" (an item high in first-visit order rate but not so high in repeat order rate), and the category of "menu item being considered for discontinuance" (an item low both in first-visit order rate and repeat order rate) are set, as shown in Figure 4. Whether a first-visit order rate is high or low and whether a repeat order rate is high or low may be judged on the basis of thresholds appropriately set. Note that a score calculation method and a category setting method are not limited to the above-described ones and may be appropriately changed in accordance with, e.g., the business configuration and the customer base.

As shown in Figure 3, each item is classified into one of the four categories in accordance with a first-visit order rate and a repeat order rate. At this time, each item may be classified not only for all customers but also for each of segments, into which customers are divided by attribute (e.g., gender, age group, or region). This is because a single item may be classified into different categories for different customer segments. For example, "chicken nanban" is classified into "hidden popular menu item" for all customers but is classified into "flagship hot-plate menu item" for males in their 30s. A category which is a result of analysis of each item is associated with a restaurant ID which is identification information of a restaurant and a menu item ID together with a customer segment and is stored in the menu item score database 126.

The image analysis unit 132 performs character recognition processing (e.g., OCR) on an image showing a menu list and acquires a piece of position information (coordinate data) on a display region for each dish item in the image.

The linking processing unit 133 performs a process of linking, for each dish item, a category, into which the dish item is classified by the menu item analysis unit 131, and a piece of position information acquired by the image analysis unit 132.

The image display processing unit 134 generates, for an image showing a menu list, image data for superimposition and display of a color corresponding to a category for each item in a display region for the item.

Here, the number of computers constituting the information processing server 10 need not be one, and the information processing server 10 may be composed of a plurality of computers distributed on the communication network N. For example, the customer database 123 and the visit history database 124 may be provided in a different computer, and the computer may be coordinated with the information processing server 10.

The order taking terminal 20, the cash register terminal 30, and the reservation management terminal 40 are each capable of passing and receiving data to and from a different communication instrument via the communication network N, and every terminal device including a display unit capable of screen display based on received information and an input unit, such as a touch panel or input buttons, can be used. More specifically, an instrument obtained by installing an application program in a general-purpose terminal device, such as a tablet terminal, a personal computer (PC), a notebook PC, a smartphone, a mobile phone handset, or a PDA, can be used as each of the order taking terminal 20, the cash register terminal 30, and the reservation management terminal 40, in addition to a dedicated terminal device. If a general-purpose terminal device is used, one terminal device may serve as the order taking terminal 20, the cash register terminal 30, and the reservation management terminal 40 by switching an operation mode of the terminal device.

The order taking terminal 20 is a terminal device which is used at the time of order taking, and includes a display unit on which a menu and the like are to be displayed and an input unit (e.g., a touch panel)
for inputting an item, an order for which is taken. Identification information of and a quantity for an item input at the order taking terminal 20 are transmitted as order data to the information processing server 10 via the communication network N and is stored in the order history database 122.

The cash register terminal 30 is a terminal device which is used by a customer after a meal to check out. The cash register terminal 30 has a checkout function of calculating a total amount on the basis of order data stored in the order history database 122. In addition, the cash register terminal 30 associates, for each transaction, sales data including identification information and the quantity of each ordered item with customer attribute data, such as the headcount of customers, the gender of and an age bracket for each customer, and a group composition, and transmits the sales data to the information processing server 10.

The reservation management terminal 40 is a terminal device which manages a customer's reservation and entry to and exit from a restaurant. The reservation management terminal 40 has a schedule management function of accepting a reservation from a customer and managing a reservation date and time, a customer information acquisition function of acquiring information (e.g., a name, gender, an age group, and contact information) on the customer who made the reservation, and transmitting the information to the information processing server 10, an entering and leaving management function of accepting input of information on an arrival time, a leaving time, and the like of the customer (entering and leaving information) and managing entering and leaving of the customer, and a table management function of managing the availability of each table on the basis of customer entering and leaving information.

As the menu information acquisition terminal 50, every terminal device that is capable of passing and receiving data to and from a different communication instrument via the communication network N and includes a display unit capable of screen display based on received information, an input unit, such as a touch panel or input buttons, and an image pickup function can be used. More specifically, a personal computer (PC), to which a camera is externally attached, a tablet terminal, a smartphone, a notebook PC, a mobile phone handset, or a PDA with a built-in camera, or the like can be used as the menu information acquisition terminal 50.

### (2) Operation of Embodiment

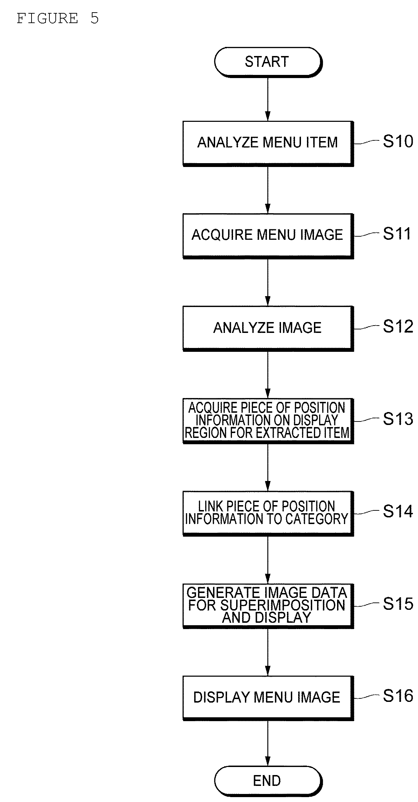

Figure 5 is a flowchart showing operation of the information processing system 1 according to the present embodiment.

First, in step S10, the menu item analysis unit 131 of the information processing server 10 performs menu item analysis on the basis of pieces of information accumulated in the order history database 122, the customer database 123, and the visit history database 124 and classifies each item registered in the registered menu item database 125 into one of the four categories (see Figure 4). At this time, menu item analysis may be performed on one item for all customers and for each of a plurality of customer segments. Note that the menu item analysis may be performed as needed, periodically performed (e.g., every day or every week), or performed when a predetermined amount of data is accumulated in any one of the order history database 122, the customer database 123, and the visit history database 124.

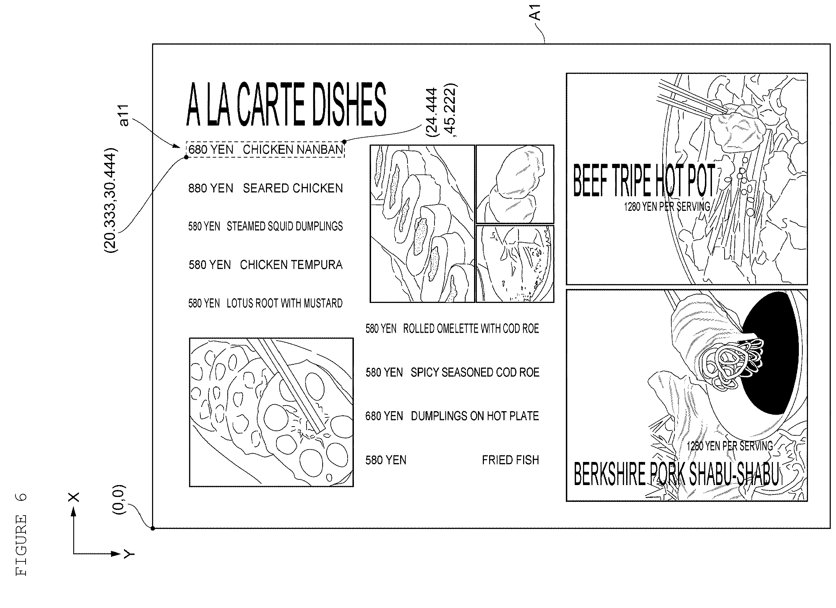

In subsequent step S11, the menu information acquisition terminal 50 acquires a menu image by picking up an image of a menu list and transmits image data of the menu image to the information processing server 10. A description will be given below on the assumption that a menu image A1 shown in Figure 6 is acquired.

In subsequent step S12, the image analysis unit 132 of the information processing server 10 performs image analysis on the menu image A1 on the basis of the image data transmitted in step S11. To be more specific, the image analysis unit 132 recognizes text from the menu image A1 through character recognition processing, refers to the registered menu item database 125, and extracts a piece of text representing each registered item.

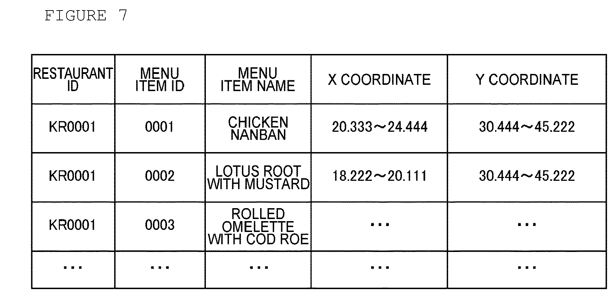

In subsequent step S13, the image analysis unit 132 acquires a piece of position information on a display region for each item extracted as a piece of text. Figure 7 is a table showing, as an example, respective pieces of position information on display regions for items in the menu image A1. For example, a piece of position information on a display region a11 for the item "CHICKEN NANBAN 600 YEN" shown in Figure 6 is expressed as the 20.333 to 24.444 coordinate range for X and the 30.444 to 45.222 coordinate range for Y with the upper left corner of the menu image A1 set as the origin (0,0). As shown in Figure 7, a piece of position information (an X coordinate and a Y coordinate) on a display region for each item is associated with a menu item ID and is stored in the position information storage unit 128.

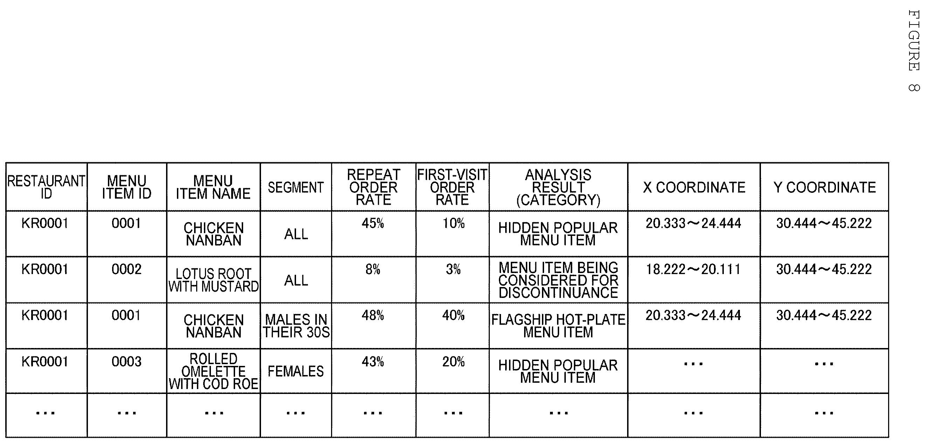

In subsequent step S14, the linking processing unit 133 links each piece of position information acquired in step S13 to a category for a corresponding item stored in the menu item score database 126, on the basis of a menu item ID. Figure 8 is a table showing an example where each piece of position information is linked to a category for an item. Here, if a plurality of analysis results (categories obtained through classification) are obtained for one item in the menu item score database 126, a corresponding piece of position information is linked to each analysis result. For example, since an analysis result for all customers and an analysis result for males in their 30s are obtained for "chicken nanban," a single piece of position information is linked to the analysis results.

In subsequent step S15, the image display processing unit 134 generates image data for superimposition and display on the menu image A1. To be more specific, the image display processing unit 134 assigns a pixel value for display of a color corresponding to a category linked to the piece of position information to pixels corresponding to the piece of position information on the display region for each item. At this time, the image display processing unit 134 may generate image data for superimposition and display for each customer segment. The generated image data is stored in the heat map data storage unit 129.

In subsequent step S16, the information processing server 10 transmits the image data for superimposition and display generated in step S15 to the menu information acquisition terminal 50, and causes the menu information acquisition terminal 50 to display a menu image with a color corresponding to a category superimposed in the display region for each item by combining the image data with the image data of the menu image.

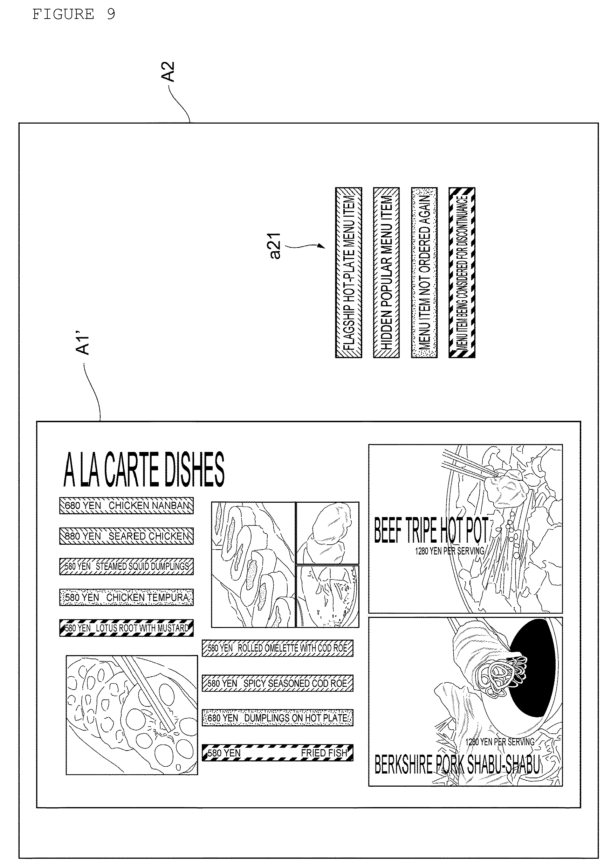

Figure 9 is a schematic view showing a display example of a menu image. As shown in Figure 9, a menu image A1' obtained by superimposing and displaying a color in the display region for each item in the menu image A1 shown in Figure 6 and a legend a21 about colors superimposed in display regions are displayed on a screen A2 of the menu information acquisition terminal 50. Note that different colors are indicated by different patterns in Figure 9.

A user can easily grasp a relationship between the composition of a menu list and the condition of sales by referring to the above-described menu image A1'. More specifically, the user can visually and intuitively grasp to which one of "flagship hot-plate menu item," "hidden popular menu item," "menu item not ordered again," and "menu item being considered for discontinuance" each item belongs, through association with where the item is arranged in the menu list. For this reason, the user can judge, for example, that each "flagship hot-plate menu item" is popular both with first-time visitors and with repeat guests and that the position of the "flagship hot-plate menu item" in the menu list need not be changed. Since each "hidden popular menu item" is popular with repeat guests but is unlikely to be ordered by first-time visitors, it is conceivable that the "hidden popular menu item" is less noticeable. The user can decide to change the layout such that the hidden popular menu item is noticeable in the menu list. Since each "menu item not ordered again" is ordered by first-time visitors but is unpopular with repeat guests, it is conceivable that the "menu item not ordered again" is eye-catching in the menu list but the item itself does not meet expectations of customers. The user can judge that the item itself needs to be improved. As for each "menu item being considered for discontinuance," the user can judge that whether the "menu item being considered for discontinuance" is less noticeable in the menu list or is an unpopular item needs to be considered.

Note that although the information processing server 10 side performs character recognition on a menu image in the above-described embodiment, the menu information acquisition terminal 50 side may perform the character recognition. In this case, the menu information acquisition terminal 50 may transmit only text data extracted through character recognition processing and a piece of position information on a display region for text to the information processing server 10.

Alternatively, the information processing server 10 may read out image data for superimposition and display stored in the heat map data storage unit 129 and transmit the image data to the menu information acquisition terminal 50 upon request from the menu information acquisition terminal 50. In this case, the menu information acquisition terminal 50 may request image data for superimposition and display generated for a particular customer segment.

### Reference Signs List

- 1: information processing system
- 10: information processing server
- 11: communication interface
- 12: storage unit
- 13: processor
- 20: order taking terminal
- 30: cash register terminal
- 40: reservation management terminal
- 50: menu information acquisition terminal
- 121: information processing program
- 122: order history database
- 123: customer database
- 124: visit history database
- 125: registered menu item database
- 126: menu item score database
- 127: image storage unit
- 128: position information storage unit
- 129: heat map data storage unit
- 131: menu item analysis unit
- 132: image analysis unit
- 133: linking processing unit
- 134: image display processing unit

## Claims

1. An information processing system comprising:
at least a storage unit that stores order history information for a plurality of items;
a menu item analysis unit that classifies each of the plurality of items into one of a plurality of categories on the basis of the order history information;
an image analysis unit that acquires a piece of position information on a display region for each item in an image showing a menu list, on which the plurality of items are displayed; and
an image display processing unit that generates image data for superimposition and display of an image corresponding to the category, into which each item in the image showing the menu list is classified, in the display region for the item.

2. The information processing system according to claim 1, wherein the image display processing unit generates image data for superimposition and display of a color corresponding to the category, into which each item is classified, in the display region for the item.

3. The information processing system according to claim 2, further comprising
a linking processing unit that links the piece of position information on the display region for each item to the category, into which the item is classified, wherein
the image display processing unit assigns a pixel value for display of the color corresponding to the category linked to the piece of position information to a pixel corresponding to the piece of position information.

4. The information processing system according to any one of claims 1 to 3, wherein the menu item analysis unit classifies each of the items on the basis of an order quantity for the item and the number of groups of customers.

5. The information processing system according to claim 4, wherein
the storage unit further stores customer visit history information, and
the menu item analysis unit calculates, for each of the items, an order rate which is a ratio of an order quantity to the number of groups of customers in a first case using the number of groups of customers on first visits as a denominator and an order rate in a second case using the number of groups of customers on second or subsequent visits as a denominator and classifies the item on the basis of the order rates in the first and second cases.

6. The information processing system according to any one of claims 1 to 5, wherein
the storage unit further stores information on customer attributes, and
the menu item analysis unit classifies each of the items for each of the customer attributes.

7. The information processing system according to any one of claims 1 to 6, further comprising a terminal device that has an image pickup function and generates the image by performing image pickup of the menu list.

8. A program for causing a computer to execute:
at least a step of classifying each of a plurality of items into one of a plurality of categories on the basis of order history information for the plurality of items;
a step of acquiring a piece of position information on a display region for each item in an image showing a menu list, on which the plurality of items are displayed; and
a step of generating image data for superimposition and display of an image corresponding to the category, into which each item in the image showing the menu list is classified, in the display region for the item.

9. A method executed by one or a plurality of computers, comprising:
at least a step of classifying each of a plurality of items into one of a plurality of categories on the basis of order history information for the plurality of items;
a step of acquiring a piece of position information on a display region for each item in an image showing a menu list, on which the plurality of items are displayed; and
a step of generating image data for superimposition and display of an image corresponding to the category, into which each item in the image showing the menu list is classified, in the display region for the item.
